# EUROPEAN PATENT APPLICATION

(11) **EP 1 973 219 A2**
(43) Date of publication of application: **24.09.2008**
(21) Application number: 07105924.0
(22) Date of filing: 11.04.2007
(51) Int. Cl.: H02K 7/08

(54) **Fan motor**

(30) Priority: 23.03.2007 EP 07104778
(71) Applicant: L&P Swiss Holding Company, 9303 Wittenbach (CH)
(72) Inventor: Stössel, Veit, 90409 Nürnberg (DE)
(74) Representative: Banzer, Hans-Jörg

(57) **Abstract**

A fan motor comprises a stator (20), a rotor (10') having a rotor shaft (14), and support means (25, 26, 29) for supporting the rotor (10'). The support means (25, 26, 29) comprise magnet means (26) for exerting a magnetic force on the rotor (10') along an axial direction of the rotor shaft (14). The magnet means may be configured as a permanent magnet (26) positioned along an axial direction of the rotor shaft (14).

## Description

The present invention relates to a fan motor. More particularly, the present invention relates to a fan motor that may be used in vehicles, in particular in vehicle ventilation systems.

Fan motors used in environments such as vehicle ventilation systems are subject to various specific requirements. For example, the installation space available usually requires the fan motor to have small dimensions, i.e., to be configured as a miniature motor that has outer dimensions on the order of a few centimeters. Further, in order to avoid disturbing noise emanating from the fan motor, the fan motor has to be configured so as to suppress or, if possible, minimize noise generation.

In conventional miniature fan motors, noise is generated by several different mechanisms. On the one hand, friction between stationary and rotating parts of the fan motor may result in noise emanating from the fan motor. In conventional fan motors, large contact areas between moving and stationary fan motor portions, e.g., between a washer that is coupled to and co-rotates with a rotor shaft and an adjacent bearing which radially supports the rotor shaft, may give rise to substantial and time-varying friction noise. Another mechanism that may lead to the generation of noise is a vibration of the fan motor that is transferred to other components of the vehicle and thus result in noise emanating from the other components which are made to oscillate by the fan motor. Further, variations in fan motor rotation speeds may cause noise levels to be time varying.

The object of the present invention is to provide a fan motor suitable for use onboard of vehicles which has reduced noise generation and reduced vibrations.

According to the present invention, this object is achieved by a fan motor as defined in claim 1. The dependent claims define preferred or advantageous embodiments.

A fan motor according to the present invention comprises a stator, a rotor having a rotor shaft and support means for supporting the motor. The support means comprise magnet means that exert a magnetic force on the rotor along an axial direction of the rotor shaft. The magnetic force that acts on the rotor in an axial direction of the rotor shaft assists in the positioning of the rotor and in providing support to the rotor in an axial direction. The support provided to the rotor by the magnet means allows contact areas between moving and stationary fan motor parts to be reduced, which in turn reduces friction noise.

The magnet means and rotor may be configured in such a way that the magnet means exert the magnetic force on any suitable rotor component. In one embodiment, the magnet means comprise a permanent magnet which exerts the magnetic force on the rotor shaft, the rotor shaft being formed of a metal. In one embodiment, the rotor shaft is formed of a metal that is non-ferromagnetic, i.e., which does not have a permanent magnetic moment. In one embodiment, the rotor shaft may be formed of non-ferromagnetic stainless steel. Since an end of the rotor shaft may be disposed in proximity to the permanent magnet, a large magnetic force may be generated when the magnet means magnetically interacts with the rotor shaft without compromising the mechanical stability of the rotor shaft.

In one embodiment, one of the rotor and the stator may comprise a permanent magnet having a face surface on which a plurality of magnetic sections are provided, and the other one of the rotor and the stator may comprise a magnet coil facing the face surface of the permanent magnet. In an embodiment, the motor is electrically commuted, i.e., an alternating current is supplied to the magnet coil to vary the magnetic field generated by the magnet coil in a pre-defined manner. In one embodiment, the magnetic sections may comprise a first magnetic section and a second magnetic section having opposite first and second polarities, respectively, a boundary between the first and second magnetic sections being sloped relative to a circumferential direction of the face surface, e.g., at an angle of 50° relative to a tangent on the circumferential direction of the face surface. The resulting magnetic field gradients, which vary smoothly in an axial direction of the permanent magnet, result in reduced variations of the torque applied to the rotor as compared to boundaries directed along an axial direction of the face surface.

In one embodiment, the magnet coil comprises a coil core that is asymmetrical in a circumferential direction of the face surface. The coil core may have a varying width and/or outer radius in a circumferential direction of the face surface. Due to the asymmetry of the coil core and the magnetic field gradient effect thereby when a current is supplied to the magnet coil, the rotor rotates in a pre-defined rotation direction upon start-up of the fan motor.

In one embodiment, the fan motor may comprise power supply means to supply power to the motor coil, which power supply means comprise adjusting means to adjust the power supplied to the motor coil based on an operational parameter, e.g., an operating time or rotational speed, of the rotor. By appropriately adjusting the power supplied to the motor coil, a current having large amplitude may be supplied during or shortly after start-up of the fan motor, and a current having smaller amplitude may be supplied when the rotor is already rotating at a desired rotational speed. In this manner, the generation of time-varying noise that results from time-varying rotational speeds may be reduced. Further, with the current amplitude being reduced during operation of the motor, the motor speed may be reduced, resulting in reduced noise.

The fan motor according to the present invention may be advantageously utilized in vehicle ventilation systems. However, the application of the fan motor is not restricted thereto. Rather, the fan motor may also be utilized in any other system in which fan motors, in particular fan motors having small dimensions, are employed.

In the following, preferred or advantageous embodiments of the invention will be described with reference to the drawings.

Fig. 1 is a schematic cross-sectional view of a fan motor according to an embodiment of the invention.

Fig. 2 is an exploded perspective view of the fan motor of Fig. 1.

Fig. 3 is a schematic cross-sectional view of a fan motor according to another embodiment of the invention.

Fig. 4 is an exploded perspective view of the fan motor of Fig. 3.

Fig. 5 is a schematic perspective view of a rotor magnet of the fan motor of Fig. 1 or Fig. 3.

Fig. 6 is a schematic perspective view of a coil core of the fan motor of Fig. 1 or Fig. 3.

Fig. 7 is a schematic circuit diagram of power supply means that may be utilized in the fan motor of Fig. 1 or Fig. 3.

Figs. 8A and 8B are schematic circuit diagrams of the power supply means of Fig. 7, which show adjusting means in more detail and illustrate current flows during start up (Fig. 8A) and in a steady operation state (Fig. 8B), respectively.

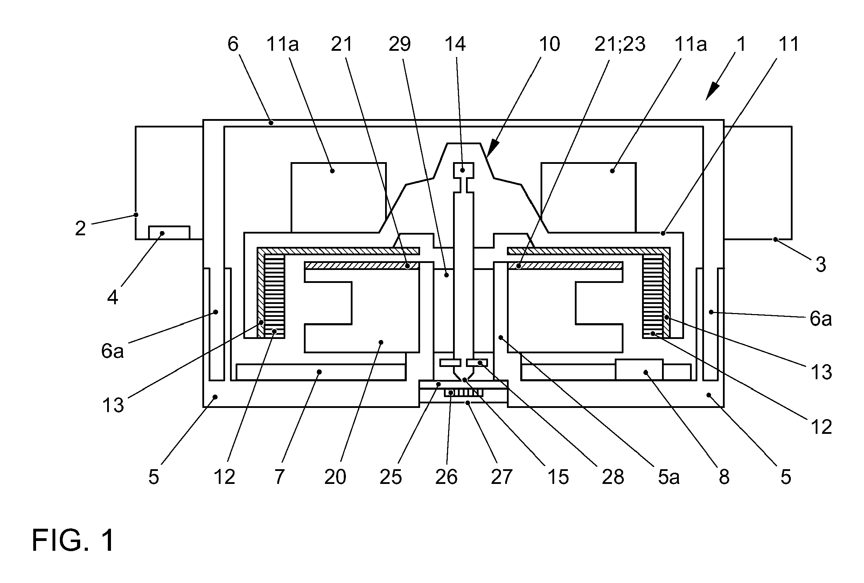

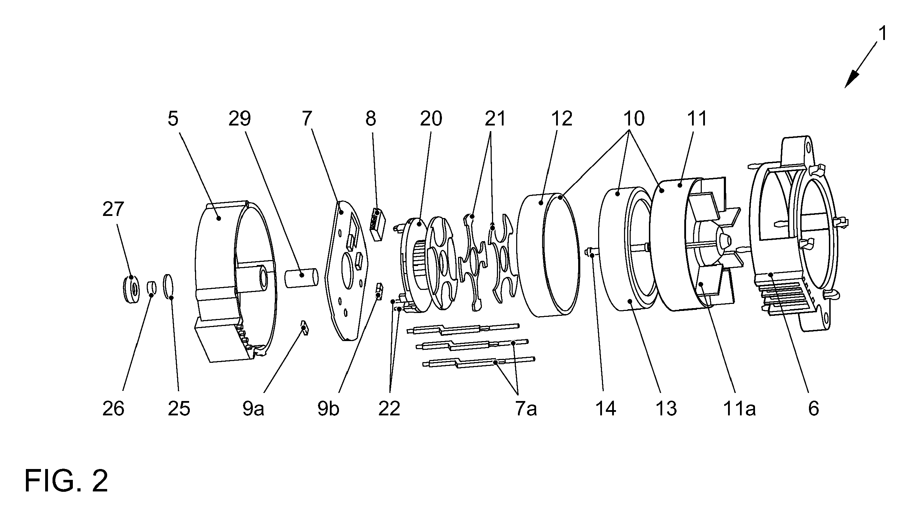

Fig. 1 is a schematic cross-sectional view and Fig. 2 is an exploded perspective view of a fan motor according to an embodiment of the invention. In the illustrated embodiment, a rotor of the fan motor is formed integrally with a fan impeller. The fan motor 1 comprises a rotor 10 and a stator 20 which are supported in a bottom housing 5. A cap 6 having apertures for the passage of air partially surrounds the rotor 10 and is coupled to the bottom housing 5 by engaging protrusions 6a received in corresponding recesses in the bottom housing 5. As schematically illustrated in Fig. 1, in use of the fan motor, air ducts 2, 3 are coupled to the cap 6 to guide air to or from the fan, respectively. In the air duct 2, a sensor 4 for sensing a property of the air guided to or from the fan is arranged. The sensor 4 may, e.g., be a temperature sensor, a humidity sensor, or any other suitable sensor. It is to be understood that, while the air ducts 2, 3 are shown to be provided directly on the housing of the fan motor 1 of Fig. 1, this arrangement is only exemplary. In particular, the air ducts 2, 3 may be formed of air ducts of a ventilation system, e.g. of a vehicle, which comprises the fan motor, the fan motor having appropriate air ports for the intake of air from or the delivery of air to the air ducts of the ventilation system. The sensor 4 does not need to be provided on a component that is formed integrally with the fan motor 1, but may also be provided at any other suitable location in the ventilation system. I.e., the sensor 4 may be provided externally to and separately from the fan motor 1. In yet another embodiment, the sensor 4 may be omitted.

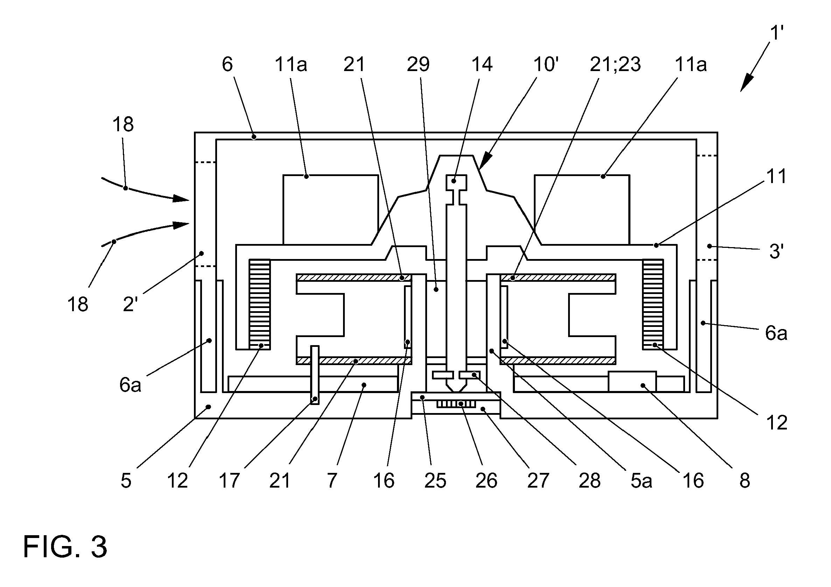

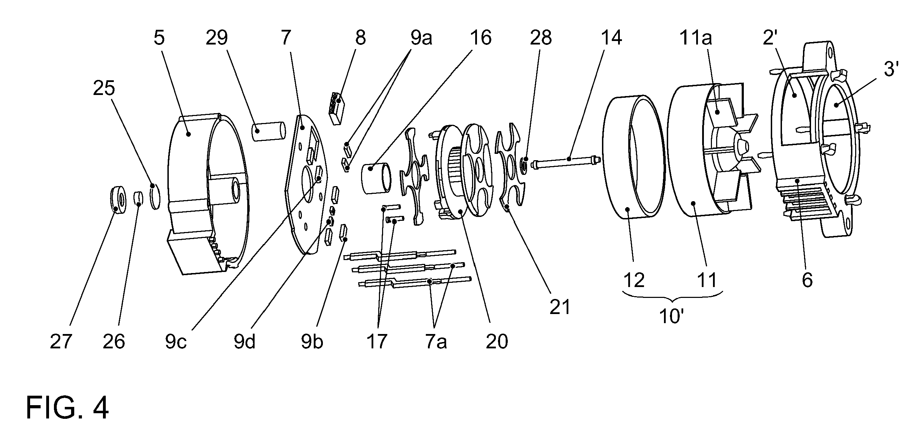

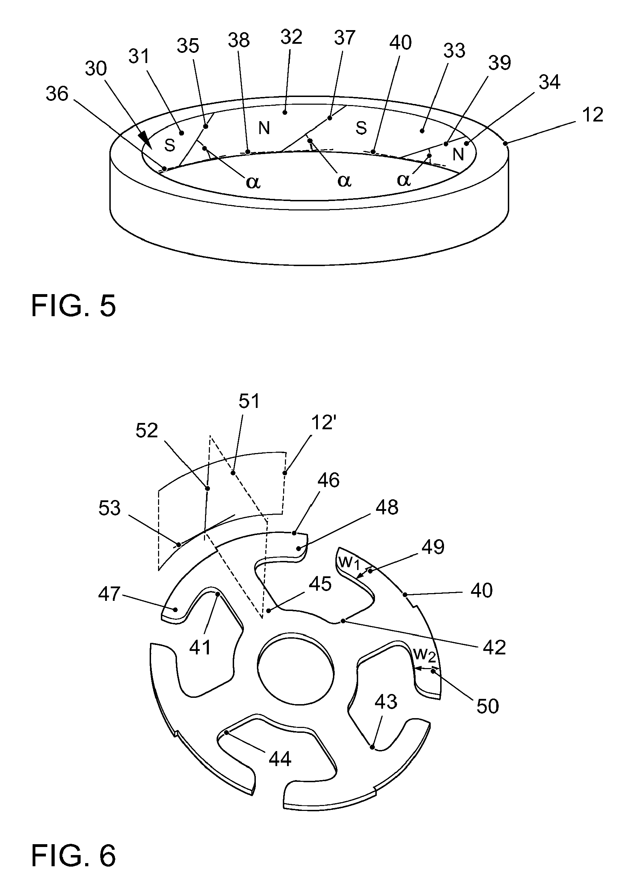

The rotor 10 comprises the impeller 11 to which a permanent magnet 12, to be described in more detail with reference to Fig. 5 below, and a flux ring 13 are mounted, and a rotor shaft 14 about which the rotor rotates. On an upper surface of the impeller 11, impeller paddles 11a are provided. While the rotor 10 of the fan motor 1 of the exemplary embodiment of Figs. 1 and 2 is shown to comprise the impeller 11 coupled to the permanent magnet 12 and the flux ring 13, in alternative embodiments, the flux ring may also be omitted, as will be explained in more detail with reference to the embodiment of Figs. 3 and 4 below. In an embodiment, the magnet 12 is a rubber magnet that is attached to the impeller 11. The rubber magnet may include a ferromagnetic material, e.g., Sr_{0,6}Fe₂O₃. While the permanent magnet 12 is illustrated to have the shape of a hollow cylinder in Figs. 1 and 2, it will be appreciated that the permanent magnet 12 may also be implemented to have other shapes and may be configured to have, e.g., a conical or frustoconical shape. The rotor shaft is formed of a metal that may, but does not need to be ferromagnetic. In one embodiment, the rotor shaft is formed of non-ferromagnetic stainless steel, e.g., from X30Cr13.

The stator 20, secured to the bottom housing 5 by support pins 22, comprises a stator stack 21 which includes a plurality of magnet coils 23 (not shown in Fig. 2) wound around coil cores and which generates an alternating magnetic field to drive the rotor 10. An outer circumference of the stator stack 21 faces an inner face surface of the permanent magnet 12. As will be described in more detail with reference to Fig. 6 below, the stator stack 21 has an asymmetrical configuration in a rotation direction of the rotor, i.e., along a circumferential direction of the stator 20, to ensure that the rotor 10 is always driven in the same direction upon start-up of the fan motor 1.

The magnet coils 23 of the stator 20 are energized by power supply means. A circuit of the power supply means is implemented on a printed circuit board 7 which is also housed in the housing 5 and to which various electrical components may be mounted, e.g., an integrated circuit 8 which generates an alternating current or voltage supplied to the magnet coils 23, a capacitance 9a, a diode 9b or other suitable electrical components. The printed circuit board 7 is coupled to or integrally formed with terminals 7a via which, in the state mounted in the vehicle, power is supplied to the fan motor 1 or signals indicative of the fan motor operation are output.

While, in the embodiment of Figs. 1 and 2, the stator comprises the magnet coils 23 which are energized to generate a time-varying magnetic field and the rotor 10 comprises the permanent magnet 12, the present invention is not restricted thereto. In other embodiments, the stator may comprise a permanent magnet and the rotor may comprise magnet coils.

The rotor 10 is supported in the bottom housing 5 via the rotor shaft 14 that extends through a hollow cylindrical central protrusion 5a of the bottom housing 5. In the hollow cylindrical protrusion 5a, a central portion of the rotor shaft 14 is supported by a bearing 29 arranged inside of the hollow cylindrical protrusion 5a, the rotor shaft 14 extending through a central aperture in the bearing 29. A thrust plate 28 is provided on a lower portion of the rotor shaft 14 to assist in correctly positioning the rotor shaft 14 in an axial direction, i.e., in preventing the rotor shaft 14 from moving axially out of its correct position in operation. A bottom portion 15 of the rotor shaft 14 abuts a support plate 25 mounted to the bottom housing 5 by a fixing plate 27 which may be secured to the bottom housing 5, e.g., by screwing, riveting, using clip connections or in any other suitable way. On a side of the support plate 25 opposite to the side on which the rotor shaft 14 abuts, a permanent magnet 26 is provided and secured in place by the fixing plate 27.

The permanent magnet 26, which may be, e.g., a N35SH magnet or another permanent magnet, such as a magnet formed of or comprising rare earth permanent magnets NdFeB, exerts a magnetic force on the rotor shaft 14. When the rotor shaft 14 is formed of a material that does not have a permanent magnetic moment, the magnetic force between the permanent magnet 26 and the rotor shaft 14 results from the magnetic moment induced by the permanent magnet 26 in the rotor shaft 14. When the rotor shaft 14 has a permanent magnetic moment, the magnetic force results from magnetic dipole interaction between the rotor shaft 14 and the permanent magnet 26. The magnetic force exerted onto the rotor shaft 14 and, thus, onto the rotor 10 by the permanent magnet 26 assists in axially positioning the rotor 10. In an embodiment, the magnetic force is attractive and limits an axial play of the rotor shaft 14 and, thus, of the rotor 10 comprising the impeller 11. As schematically illustrated in the cross-sectional view of Fig. 1, the magnetic force acting in an axial direction of the rotor 10 allows the contact area between moving and stationary parts to be reduced. In particular, the only contact area that provides for axial positioning in the fan motor 1 is the contact area between the bottom portion 15 of the rotor shaft 14 and the support plate 25, this contact area being small. By reducing the size of the contact area, the generation of friction noise is reduced.

While in the exemplary embodiment of Figs. 1 and 2 the permanent magnet 26 serves as magnet means which exert a magnetic force on the rotor 10 along an axial direction of the rotor shaft 14 and which are disposed along the axial direction of the rotor shaft 14, in other embodiments, the magnet means may be implemented in different ways. For example, the magnet means may also be implemented as an electromagnet and/or may be disposed radially outwards relative to an axial extension of the rotor shaft 14. In other embodiments, the magnet means may exert a magnetic force on rotor components other than the rotor shaft.

It is to be understood that the construction of the fan motor 1 shown in Figs. 1 and 2 is not to be taken in a limiting sense, and that many modifications of the construction may be implemented in other embodiments. For example, air ducts do not need to be formed integrally with the fan motor, the sensor for sensing an air property may also be omitted, or the flux ring of the rotor may be omitted. Similarly, additional components may be incorporated into the fan motor, as will be illustrated in more detail next.

A fan motor 1' according to another embodiment is illustrated in Figs. 3 and 4, Fig. 3 showing a cross sectional view and Fig. 4 showing an exploded perspective view of the fan motor 1'. The basic construction of the fan motor 1' is similar to the one of the fan motor 1 of Figs. 1 and 2, and the same reference numerals designate elements and features having the same or a similar construction and function.

The fan motor 1' comprises a stator 20 including a stator stack 21 and a magnet coil 23 (not shown in Fig. 4), the configuration of the stator 20 being essentially identical to the one of the stator 20 explained with reference to Figs. 1 and 2 above, and a rotor 10' which comprises an impeller 11 having impeller paddles 11 a, a permanent magnet 12 attached to the impeller 11 and a rotor shaft 14 about which the rotor 10' rotates. As may be seen in Figs. 3 and 4, the fan motor 1' does not comprise a flux ring interposed between the magnet 12 and the impeller 11. Both the stator 20 and the rotor 10' are disposed inside the housing 5 and cap 6. A bottom portion of the rotor shaft 14 abuts a support plate 25, below which a magnet 26 is arranged to exert a magnetic force on the rotor shaft 14, thereby assisting in axially positioning the rotor 10'.

In the fan motor 1', an additional sleeve 16 is provided around a portion of the central protrusion 5a of the housing 5 on a side of the stator 20 facing the rotor shaft 14. The sleeve 16 may be formed of a metal, e.g., as an iron sleeve. In the latter case, the sleeve 16 reinforces the magnetic field generated by the magnet coils 23 of the stator 20 and thereby increases the torque exerted onto the rotor 10'.

As may also be seen in Figs. 3 and 4, the fan motor 1' is not attached to or integrally formed with dedicated air ducts. Rather, the cap 6 comprises air ports 2' and 3', e.g., air inlet ports and/or air outlet ports, for the intake and delivery of air. An exemplary flow of air 18 is shown in Fig. 3. It will be appreciated that the fan motor 1' may be installed in a duct system of, e.g., a vehicle ventilation system, such as a car ventilation system, in which case the air ducts of the ventilation system guide air to the fan motor 1' or receive air from the fan motor 1'. Suitable sensors, such as the sensor 4 for sensing the air temperature or another property of the air, may be arranged in the air ducts of the ventilation system.

The magnet coils 23 of the stator 20 are energized by a power supply means, a circuit of the power supply means being implemented on the printed circuit board 7 on which various electrical components, such as the integrated circuit 8, capacitances 9a, a diode 9b, a resistance 9c, a dynatron 9d or any other suitable component may be mounted. The circuit board 7 is also provided inside the housing 5 and cap 6 assembly. In the fan motor 1', separate support pins 17 are provided to assist in mounting the circuit board 7 and the stator 20 to the housing 5.

The other configuration of the various components of the fan motor 1' is identical to the one of the corresponding components of the fan motor 1 described with reference to Figs. 1 and 2 above. In particular, the rotor shaft 14 and the magnet 26 of the fan motor 1' may be formed of any one of the materials discussed with reference to Figs. 1 and 2 above.

With reference to Fig. 5, a configuration of the magnet 12 of the rotor 10 or 10' will be explained in more detail. The magnet 12 has a cylindrical face surface 30 which faces the stator 20. On the face surface 30, i.e., the inner surface of the hollow cylindrical magnet 12, a plurality of magnetic sections 31-34 (eight for the magnet 12 of Fig. 5) are provided, only four of which are shown in Fig. 5. Sections 31 and 33 have S-polarity, while sections 32 and 34 have N-polarity. The boundaries between adjacent sections of S-polarity and of N-polarity on the face surface 30 are designated by 35, 37, and 39, respectively, in Fig. 5. The boundaries 35, 37, and 39 between adjacent magnetic sections of opposite polarity are approximately rectilinear and are not aligned with an axial direction of the hollow cylindrical magnet 12. Rather, the boundaries 35, 37, and 39 are angled at an angle of approximately 50° relative to the circumferential directions, schematically indicated at 36, 38 and 40, respectively, of the hollow cylindrical magnet 12. In other words, the boundaries have a finite slope relative to the circumferential direction of the magnet 12. In operation of the fan motor, the circumferential offset of the boundary between adjacent zones as a function of axial position along the magnet 12 leads to less abrupt changes in the torque exerted on the rotor 10 or 10', which in turn reduces vibrations of the fan motor 1 or 1'.

Fig. 6 shows a coil core 40 that may form part of the stator stack 21 of the stator 20 of the fan motor 1 or the fan motor 1'. As may be seen, the coil core 40 comprises four T-shaped protrusions or poles 41-44, offset relative to each other by 90°. Each of the stator protrusions 41-44 respectively has a radially extending portion 45, from an outer end of which there extends a circumferential portion 46 having a first portion 46 and a second portion 47 which extend in opposite directions from the radially directed portion 45. The first portion 47 has a width W₁, indicated at 49, in a radial direction, and the second portion 48 has a width W₂, indicated at 50, in the radial direction of the coil core 40 which is different from the width W₁. In other words, outer edges of the first and second portions 47, 48 of the protrusions 41-44 have different radii as measured from the center of the coil core 40. Consequently, each of the stack protrusions 41-44 is asymmetrical in a circumferential direction, i.e., relative to a plane 51 which is parallel to an axial direction 52 of the rotor magnet 12, of which the portion 12' adjacent to the stack protrusion 41 is schematically shown in Fig. 6, and perpendicular to the circumferential direction 53 of the adjacent portion 12' of the rotor magnet 12. In other words, the stack protrusions 41-44 are asymmetrical relative to a plane which is directed radially along the respective protrusion and extends in the axial direction of the magnet 12. The asymmetry of the coil core 40, and consequently of the stator stack, has the effect of generating magnetic fields which are, in turn, asymmetrical in the circumferential direction and result in the rotor 10 or 10' being rotated in one and the same direction when the fan motor is energized.

To supply power to the magnet coil 23 or magnet coils 23 wound around the coil core 40, the printed circuit board 7 and electrical components mounted thereto form a power supply circuit, representing power supply means. Exemplary implementations of the power supply circuits according to various embodiments will be explained next.

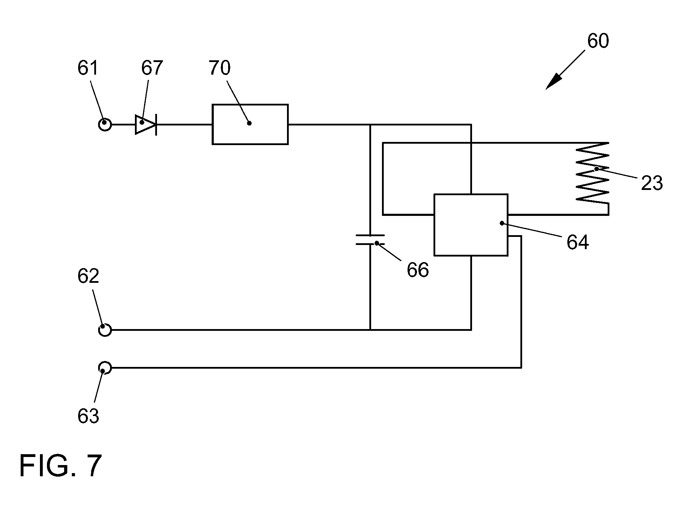

Fig. 7 is a schematic circuit diagram showing a power supply means 60 which may be used in a fan motor according to one embodiment. The power supply means 60 comprises terminals 61, 62 which, in use, are connected to an external power supply. For example, the terminals 61, 62 may be formed as terminals 7a of the fan motor which are coupled to a positive and negative supply potential of a vehicle electrical system. A further terminal 63 provides an output signal indicative of a rotational speed of the fan motor. The power supply circuit comprises a circuit 64, which may be configured as an integrated circuit, e.g., as a US72 or US73 fan motor driver integrated circuit, and which is coupled to the magnet coil 23 to output an alternating current or voltage to the magnet coil 23. The terminal 61 is coupled via a diode 67 and an adjusting circuit 70 to the circuit 64, and the terminal 62 is also coupled to the circuit 64. The alternating current or voltage output from the circuit 64 may, e.g., have a square waveform or another suitable waveform, e.g., sinusoidal. A capacitor 66 is interconnected in parallel to the circuit 64 to be charged or discharged by the induction currents generated in the magnet coil 23 when the current through the magnet coil 23 is reversed.

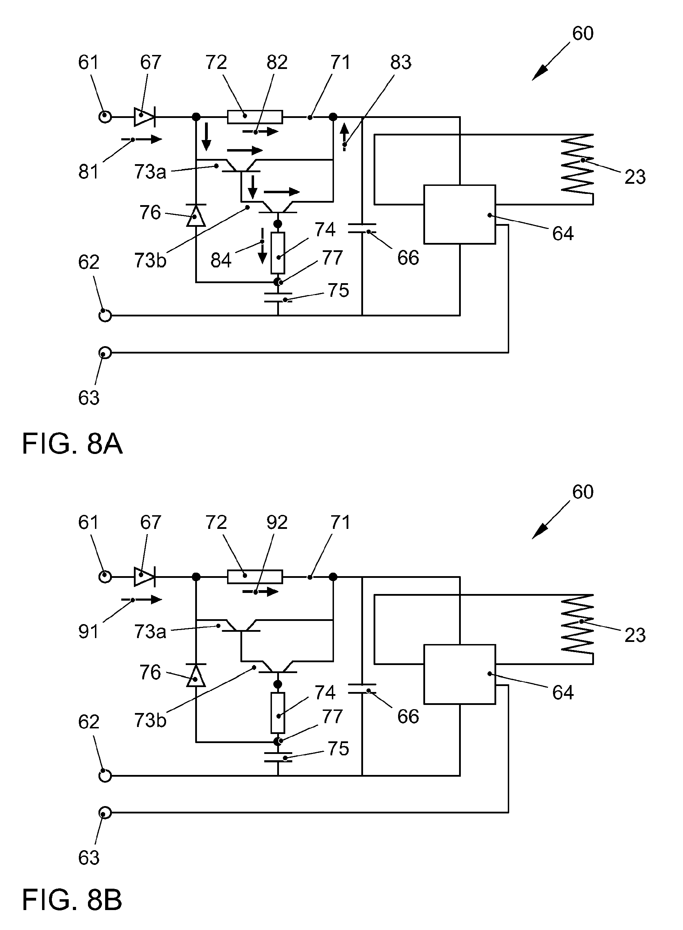

The adjusting circuit 70, an exemplary implementation of which will be described in more detail with reference to Fig. 8 below, is configured to adjust the voltage or current supplied to the circuit 64 in dependence on an operational parameter of the fan motor. The operational parameter may correspond to an operating time for which the fan motor has already been in operation, to a rotational speed of the fan motor, or to similar parameters or conditions.

With reference to Fig. 8, an implementation of the adjusting circuit 70 will be explained in more detail next. In Fig. 8, elements, which are identical or similar to elements shown in and explained with reference to Fig. 7, are indicated by identical or similar reference numerals, and a detailed description of these elements will be omitted for brevity.

In the power supply circuit 60 shown in Fig. 8, the adjusting means comprise a first conduction path 71 including a resistor 72 and a second conduction path including two transistors 73a, 73b or triodes connected in series, the second conduction path being connected in parallel to the first conduction path 71. One terminal of the transistor 73b is coupled to a capacitor 75 and a diode 76 via a resistor 74. The diode 76 provides a discharge path for the capacitor 75 when the operation of the fan motor is stopped. The series connection of transistors 73a, 73b provides the second conduction path that is interconnected in parallel to the first conduction path 72 and allows the capacitor 75 to become charged upon start-up of the fan motor via the resistor 74. Due to the charging of the capacitor 75, the potential at a terminal 77 coupled to the transistor 73b via the resistor 74 is altered, thereby changing the relative amplitudes of currents flowing through the first and second conduction paths, respectively, as will be explained in more detail next.

Fig. 8A schematically illustrates current flows in the power supply circuit 60 at or shortly after start-up of the fan motor. In this initial state, the capacitor 75 is not charged or stores only little charge, so that the second conduction path through the transistors 73a, 73b has a low resistance, i.e., the resistance of the second conduction path is small compared to the one of the first conduction path 71, which is given by the resistance of the resistor 72. Therefore, power is supplied to the circuit 64 mainly via current flow through the second conduction path, schematically indicated as arrow 83, which current has a large amplitude due to the low resistance of the second conduction path. In other words, the voltage drop across the first and second conduction paths is small since current mainly flows through the low-resistance second conduction path. Part of the current flowing through the second conduction path flows to and charges the capacitor 75, the charging current being indicated at 84. The time constant for charging the capacitor 75 is dependent on the resistance of the resistor 74 and may be adjusted by appropriately selecting the resistance of the resistor 74. In one embodiment, the resistance of the resistor 74 may be selected so that the time constant for charging the capacitor 75 is approximately equal to the time required for the rotor 10 or 10' to reach a desired rotational speed. The potential at the terminal 77 which is coupled to the transistor 73b via the resistor 74 varies in correspondence to the charge accumulated on the capacitor 75.

Fig. 8B schematically illustrates current flows in the power supply circuit 60 at a time at which the rotor 10 or 10' of the fan motor has reached a desired rotational speed and/or the fan motor has been in operation for a pre-determined time period. In this state, the charged capacitor 75 adjusts the potential at the terminal 77 to a value which effictively switches off the second conduction path, i.e., the second conduction path is in a high-resistance state. Then, current 91 supplied at the terminal 61 flows mainly through the first conduction path 71, resulting in a large voltage drop across the resistor 72. In other words, in the state shown in Fig. 8B, the voltage drop across the first and second conduction paths is larger than in the state shown in Fig. 8A, thereby decreasing the power supplied to the circuit 64 and to the magnet coil 23.

It will be appreciated that the implementation of the adjusting means explained with reference to Fig. 8 is only exemplary and various modifications thereof may be implemented in other embodiments. For example, the series connection of transistors 73a, 73b may be replaced by a single transistor, a Darlington transistor, or any other suitable electrical component. Further, other electrical components, such as triodes, may be used instead of or in addition to the transistors 73a, 73b.

The power supply circuit 60 explained with reference to Figs. 7 and 8 allows the current supplied to the magnet coil 23 to be adjusted in dependencen on an operational parameter of the fan motor. Thereby, the start-up behavior of the fan motor may be improved. In particular, since the current supplied to the magnet coil 23 initially has a large amplitude, the rotor 10 or 10' reaches the desired rotational speed more quickly, and the rotational speed may subsequently be kept approximately constant by the reduction of the power supplied to the magnet coil 23 via the adjusting means, thereby reducing variations in the noise generated by the fan motor and the total noise level.

In conclusion, in the fan motor according to the present invention, which includes a magnetically supported rotor, noise generated by the fan motor may be reduced by reducing both frictional noise and vibrations of the fan motor.

## Claims

1. A fan motor, comprising
a stator (20),
a rotor (10; 10') having a rotor shaft (14), and
support means (25, 26, 29) for supporting said rotor (10; 10'), wherein said support means (25, 26, 29) comprise magnet means (26) for exerting a magnetic force on said rotor (10; 10') along an axial direction of said rotor shaft (14).

2. The fan motor of claim 1,
wherein said magnet means (26) exert said magnetic force on said rotor shaft (14).

3. The fan motor of claim 1 or claim 2,
wherein said magnet means comprise a permanent magnet (26) positioned in an axial direction relative to said rotor shaft (14).

4. The fan motor of any one of the preceding claims,
wherein said rotor shaft (14) is formed of a non-ferromagnetic metal.

5. The fan motor of any one of the preceding claims,
wherein said support means (25, 26, 29) comprise a support plate (25) interposed between sad magnet means (26) and said rotor shaft (14), said rotor shaft (14) abutting said support plate (25).

6. The fan motor of any one of the preceding claims,
wherein one of said rotor (10; 10') and said stator (20) comprises a permanent magnet (12) having a face surface (30), said face surface (30) having a plurality of magnetic sections (31-34), and
wherein the other one of said rotor (10; 10') and said stator (20) comprises a magnet coil (23) facing said face surface (30).

7. The fan motor of claim 6,
wherein said face surface (30) is cylindrical and comprises a first magnetic section (31, 33) having a first polarity and an adjacent second magnetic section (32, 34) having a second polarity opposite to said first polarity, wherein a boundary (35, 37, 39) between said first magnetic section (31, 33) and said second magnetic section (32, 34) on said face surface (30) is directed at an angle (α) relative to a circumferential direction (36, 38, 40) of said face surface (30) of less than 90°.

8. The fan motor of claim 7,
wherein said boundary (35, 37, 39) on said face surface (30) is approximately rectilinear and said angle (α) is approximately 50°.

9. The fan motor of claim 6 or 7,
wherein said magnet coil (23) comprises a coil core (40), said coil core (40) being asymmetrical relative to a plane (51) defined so as to be perpendicular to a circumferential direction (53) and parallel to an axial direction (52) of a portion of said face surface (30) facing said coil core (40).

10. The fan motor of claim 9,
wherein said coil core (40) comprises first and second portions (47, 48) facing said face surface (30), said first portion (47) having a first width (49) and said second portion (48) having a second width (50) different from said first width (49).

11. The fan motor of any one of claims 6-10, comprising
power supply means (60) coupled to said magnet coil (23) to supply power to said magnet coil (23), said power supply means (60) comprising adjusting means (70) for adjusting an amplitude of a current or voltage supplied to said magnet coil (23) based on an operational parameter of said fan motor.

12. The fan motor of claim 11,
wherein said operational parameter is an operating time or a rotational speed.

13. The fan motor of claim 11 or 12,
wherein said adjusting means comprise a first conduction path (71) and a second conduction path (73a, 73b) interconnected in parallel to said first conduction path (71), said adjusting means being configured to adjust a voltage at a terminal (77) of said second conduction path (73) based on said operational parameter of said fan motor to adjust a current amplitude in said second conduction path (73).

14. The fan motor of claim 13,
wherein said adjusting means comprise a capacitance (75) coupled to said terminal (77) of said second conduction path (73a, 73b), said capacitance (75) being interconnected to a voltage supply terminal (61, 62) to be charged based on an operating time of said fan motor.

15. A fan, comprising
an impeller (11) and
a fan motor (1) according to any one of the preceding claims, wherein said rotor (10; 10') is coupled to or formed integrally with said impeller (11).

16. The fan of claim 15,
wherein said fan is configured to be used in a vehicle ventilation system.

17. A vehicle ventilation system, comprising
the fan of claim 15 or claim 16.

18. The vehicle ventilation system of claim 17, comprising
an air duct (2, 3) to guide air towards or away from said fan, and
a sensor (4) for sensing an air property arranged in said air duct (2, 3).

19. The vehicle ventilation system of claim 18,
wherein said sensor is a temperature sensor.
